# EUROPÄISCHE PATENTANMELDUNG

(11) **EP 1 333 406 A1**
(43) Veröffentlichungstag der Anmeldung: **06.08.2003**
(21) Anmeldenummer: 02002560.7
(22) Anmeldetag: 04.02.2002
(51) Int. Cl.: G07B 15/00, G07F 7/10

(54) **Klingelton-Authentisierung**

(71) Anmelder: SIEMENS AKTIENGESELLSCHAFT, 80333 München (DE)
(72) Erfinder: Hopfmann, Christian, 81371 Muenchen (DE); Thanner, Thomas, 80798 Muenchen (DE)

(57) **Zusammenfassung**

Eine einfache, effiziente und sichere Prüfung einer Berechtigung eines Nutzers eines Endgerätes (2) wird ermöglicht durch ein Verfahren zur Prüfung (3) einer Berechtigung (5, 4) eines Nutzers (1) eines Endgerätes (2),
wobei von einer Signalerkennungseinrichtung (3) ein vom Endgerät (2) ihr (3) akustisch übermitteltes akustisches Signal (4) mit gespeicherten (13) akustischen Signal (14, 15) verglichen wird und wobei bei hinreichender Übereinstimmung des akustisch empfangenen Signals (4) mit einem gespeicherten Signal (14) die Berechtigung des Nutzers (1) des Endgerätes (2) bestätigt wird.

## Beschreibung

Die Erfindung betrifft Verfahren und Vorrichtungen zur Prüfung einer Berechtigung eines Mobilifunkendgerät-Nutzers.

Berechtigungen wie beispielsweise Berechtigungen zum Zugang zu Gebäuden oder Veranstaltungen wie beispielsweise Kinovorführungen werden bisher durch Ausgabe von Papier-Eintrittskarten, welche für jeweils eine Zutritt gültig sind oder durch Ausweise, welche auch wiederholte Berechtigungen zum Ausdruck bringen können, realisiert. Der Ausdruck der Tickets bzw. die Erstellung der Ausweise, die persönliche Abholung der die Berechtigung implizierenden Eintrittskarten bzw. deren Übersendung per Post sind relativ aufwendig.

Aufgabe der vorliegenden Erfindung ist es, eine möglichst effiziente Ausstellung und Prüfung von Berechtigungen zu erlauben. Die Aufgabe wird jeweils durch die Gegenstände der unabhängigen Ansprüche gelöst.

Durch die Verwendung eines akustischen Signals wie beispielsweise eines Mobilfunkendgerät-Klingeltones zur Authentisierung ist eine sehr einfache und effiziente und dabei dennoch sichere Übertragung der Zugangsberechtigung durch Übersendung des akustischen Signals durch eine alphanumerische Nachricht (Kurznachricht SMS, NMS etc.) über ein Mobilfunknetz an ein Mobilfunkendgerät eines Mobilfunkendgerät-Nutzers, der die Berechtigung erhalten soll, möglich. Ein Veranstalter kann also beispielsweise über das Internet eine Versendung einer Kurznachricht von einem Kurznachrichtenzentrum eines Mobilfunknetzes an ein Mobilfunkendgerät veranlassen und der Nutzer des Endgerätes kann sich bei der Veranstaltung seine Berechtigung durch Abspielen dieses akustischen Signals (beispielsweise Klingeltones) von seinem Mobilfunkendgerät authentisieren. Dabei sind sehr einfach variable Eigenschaften der Berechtigung realisierbar, indem sie seitens einer das akustische Signal des Mobilfunkendgerätes bei der Veranstaltung prüfenden Signalerkennungseinrichtung mit diesem Signal, welches erkannt wird, gespeichert werden. Beispielsweise kann ein Ticket zeitlich beschränkt sein, für einmalige oder mehrmalige Benutzung vorgesehen sein, übertragbar sein etc. Die erfindungsgemäße Berechtigungsprüfung kann auch zusätzlich zu bekannten Berechtigungsprüfungen wie Barcodelesern, Infrarot, Bluetooth erfolgen.

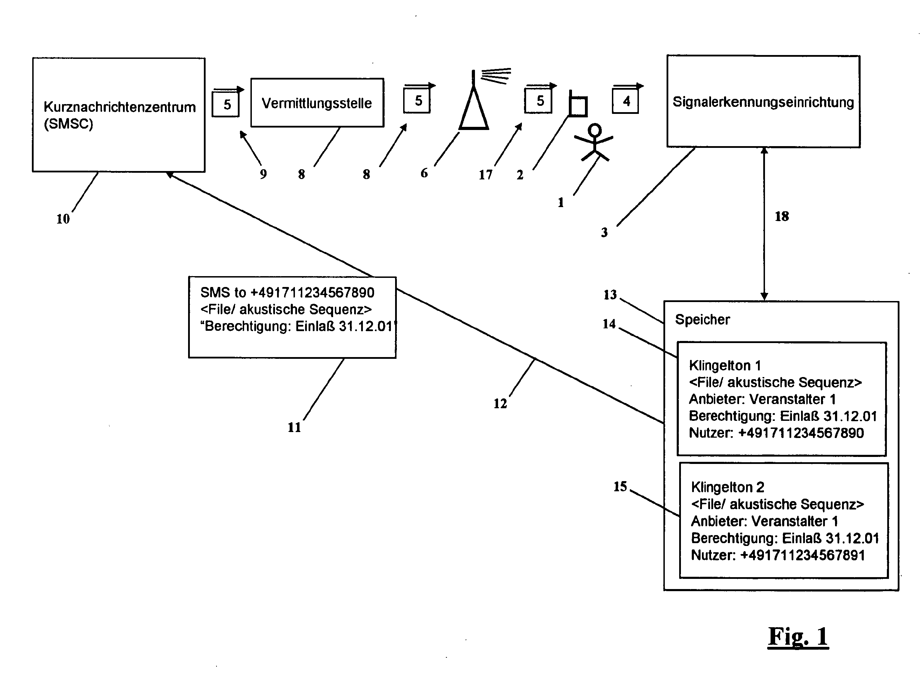

Weitere Merkmale und Vorteile der Erfindung ergaben sich aus den Ansprüchen und der nachfolgende Beschreibung eines Ausführungsbeispiels anhand der Zeichnung. Dabei zeigt
- Figur 1: schematisch eine erfindungsgemäße Berechtigungsprüfung.

Figur 1 zeigt einen Nutzer 1 eines Mobilfunkendgerätes 2, welcher sich gegenüber einer Signalerkennungseinrichtung 3 eines Veranstalters (beispielsweise eines Kinos) als berechtigt zum Eintritt (beispielsweise in einen Kinofilm um eine bestimmte Uhrzeit) erweisen möchte. Hierzu lässt der Mobilfunkendgerätnutzer 1 ein Mobilfunkendgerät 2 einen gespeicherten Klingelton 4 akustisch aussenden (indem das Mobilfunkendgerät mit diesem Klingelton klingelt, was beispielsweise über Menus am Endgerät veranlasst werden kann), worauf die Signalerkennungseinrichtung 3 den akustisch empfangenen Klingelton 4 des Mobilfunkendgerätes 2 mit in einem Speicher 13 gespeicherten Klingeltönen 14, 15 usw. vergleicht, bis sie die akustische Sequenz 4 identifizieren kann als eine gespeicherte akustische Sequenz 14, 15, worauf dem Nutzer 1 des Endgerätes 2 die Berechtigung zuerkannt wird (so dass er also beispielsweise eine Kinoveranstaltung besuchen darf).

Die vom Mobilfunkendgerät 2 akustisch ausgesendete akustische Sequenz 4 (Klingelton etc.) erhält das Mobilfunkendgerät in einer alphanumerischen Nachricht 5 wie beispielsweise einer Kurznachricht, welche über ein Mobilfunknetz (angedeutet durch Basisstationen 6, NSC 8) von einem Kurznachrichtenzentrum 10 eines Mobilfunknetzes übertragen (9, 8, 17) bekommt. Die alphanumerische Nachricht kann beispielsweise eine Kurznachricht wie eine SMS, MMS, EMS sein oder eine USSD oder sonstige Nachricht zur Übertragung von Daten sein. Auch wäre eine Übertragung der akustischen Sequenz als Sprachsignal möglich, beispielsweise als point-to-point voice message.

Das Kurznachrichtenzentrum (SMSC) 10 erhält die Anweisung 11 zum Aussenden einer Kurznachricht 5 an das Mobilfunkendgerät 2 über eine Internetschnittstelle oder Festnetzschnittstelle oder Mobilfunkschnittstelle 12 aus einem Speicher 13 mit akustischen Sequenzen 14, 15, auf welchen Speicher 13 auch die Signalerkennungseinrichtung 3 beim Überprüfen der Berechtigung (beispielsweise in einem Kino) zugreifen kann (18). Beispielsweise kann über verschiedene Internethomepages der Versand einer Kurznachricht an ein Mobilfunkendgerät mit einer vorgegebenen Nummer (beispielsweise +49 171 1234567890) veranlasst werden. Hierbei wird zweckmäßigerweise ein Text übersandt ("Berechtigung: Einlass 31.12.01"), welche dem Nutzer 1 des Endgerätes 2 darstellt, was die Nachricht 11 bedeutet. Ferner enthält die Nachricht beispielsweise als Datei eine akustische Sequenz wie einen Klingelton etc., welche im Endgerät 2 (oder in einer Mobilfunkteilnehmeridentifizierungskarte des Endgerätes 2) gespeichert wird und auf Anweisung des Endgerätnutzers 1 an das Endgerät 2 (beispielsweise über ein Menu des Endgerätes 2) zur Prüfung der Berechtigung des Benutzers abgespielt, beispielsweise am Eingang eines Kinos abgespielt, um zu beweisen, dass der Nutzer 1 eine Kinokarte hat, die ihm aus dem Speicher 13 als Kurznachricht 5 beispielsweise nach Angabe seiner Kreditkartennummer oder einer Überweisung übersandt wurde.

Die akustische Sequenz kann beispielsweise eine Ziffernfolge sein, welche wie die Wähltöne eines Telefons abgespielt wird, beispielsweise als DTMF-Sequenz. Es kann für jeden Nutzer 1 eines Mobilfunkendgerätes 2 eine andere akustische Sequenz übermittelt werden oder es können beispielsweise für mehrere Endgeräte 2 zu einer Veranstaltung oder zu unterschiedlichen Veranstaltungen die gleichen akustischen Sequenzen übertragen werden. Die Signalerkennungseinrichtung 3 vergleicht in an sich bekannter Weise die akustisch empfangene akustische Sequenz 4 und vergleicht diese in an sich bekannter Weise den Klingeltönen 14.

## Patentansprüche

1. Verfahren zur Prüfung (3) einer Berechtigung (5, 4) eines Nutzers (1) eines Endgerätes (2),
wobei von einer Signalerkennungseinrichtung (3) ein vom Endgerät (2) ihr (3) akustisch übermitteltes, akustisches Signal (4) mit gespeicherten (13) akustischen Signalen (14, 15) verglichen wird und
wobei bei hinreichender Übereinstimmung des akustisch empfangenen Signals (4) mit einem gespeicherten Signal (14) die Berechtigung des Nutzers (1) des Endgerätes (2) bestätigt wird.

2. Verfahren nach Anspruch 1 **dadurch gekennzeichnet, dass** die Berechtigung eine Berechtigung des Nutzers (1) zum Einlass zu einer Veranstaltung ist.

3. Verfahren nach einem der vorhergehenden Ansprüche **dadurch gekennzeichnet, dass** die akustische Sequenz (in 14 oder in 15) eine Zahlenfolge ist, welche vom Mobilfunkendgerät (2) als abzuspielende DTMF-Folge erkannt und abgespielt wird.

4. Verfahren nach einem der vorhergehenden Ansprüche **dadurch gekennzeichnet, dass** eine das akustische Signal (4) repräsentierende Datei (5) an das Mobilfunkendgerät (2) über ein Mobilfunknetz (10, 8, 6) übermittelt wurde und dass das Endgerät ein Mobilfunkendgerät (2) ist.

5. Verfahren nach einem der vorhergehenden Ansprüche **dadurch gekennzeichnet, dass** das Endgerät ein PDA oder Terminplaner ist.

6. Verfahren nach einem der vorhergehenden Ansprüche **dadurch gekennzeichnet, dass** das Signal als Kurznachricht, insbesondere SMS oder EMS oder MMS an das Endgerät (2) übertragen wurde.

7. Verfahren nach einem der vorhergehenden Ansprüche **dadurch gekennzeichnet, dass** das akustische Signal (4) genau eine Berechtigung des Nutzers, insbesondere eine Berechtigung für einen Eintritt zu einer Veranstaltung repräsentiert.

8. Verfahren nach einem der vorhergehenden Ansprüche **dadurch gekennzeichnet, dass** ein akustisches Signal mehrere Berechtigungen eines Nutzers, insbesondere die Berechtigung des Nutzers zum Eintritt in mehrere Veranstaltungen repräsentiert.

9. Verfahren nach einem der vorhergehenden Ansprüche **dadurch gekennzeichnet, dass** das akustische Signal zum Endgerät 2 per Internet (12) abgesandt wurde.

10. Verfahren nach einem der vorhergehenden Ansprüche **dadurch gekennzeichnet, dass** das akustische Signal (4) über eine Festnetzverbindung abgesandt wurde.

11. Verfahren nach einem der vorhergehenden Ansprüche **dadurch gekennzeichnet, dass** das Signal über ein Mobilfunknetz abgesandt wurde (12).

12. Verfahren nach einem der vorhergehenden Ansprüche **dadurch gekennzeichnet, dass** das akustische Signal (4) an das Endgerät (2) erst dann abgesandt (12, 11) wird, wenn ein Zahlungsauftrag für die Berechtigung veranlasst wurde.

13. Vorrichtung, insbesondere zur Durchführung des Verfahrens nach einem der vorhergehenden Ansprüche,
mit einer Signalerkennungseinrichtung (3), welche so ausgebildet ist, dass sie eingehende akustische Signale (4) mit gespeicherten (13) akustischen Signalen (14 / in 15) vergleicht und bei hinreichender Übereinstimmung des akustisch empfangenen Signals (4) mit einem gespeicherten (13) akustischen Signal (14) eine Berechtigung eines Nutzers (1) eines Endgerätes (2) bestätigt,
- mit einem Zugang zu einem Speicher (13) für akustische Signale (14, 15).

14. Vorrichtung nach Anspruch 13 **dadurch gekennzeichnet, dass** eine hinreichende Übereinstimmung bedeutet, dass das empfangene akustische Signal identisch mit einem gespeicherten akustischen Signal (14, 15) ist.

15. Vorrichtung nach Anspruch 13 **dadurch gekennzeichnet, dass** eine hinreichende Übereinstimmung bedeutet, dass ein akustisch empfangenes Signal (4) mit einem gespeicherten akustischen Signal (in 14) zumindest im vorgegebenen Umfang teilweise übereinstimmt.
